# FASCICULE DE BREVET EUROPEEN

(11) **EP 2 652 474 B1**
(45) Date de publication et mention de la délivrance du brevet: **11.03.2015**
(21) Numéro de dépôt: 11799432.7
(22) Date de dépôt: 19.12.2011
(51) Int. Cl.: G01M 3/28, B67D 7/32, F25B 45/00

(54) **DISPOSITIF ET PROCÉDÉ DE SURVEILLANCE ET DE SÉCURISATION D'UNE CANALISATION VÉHICULANT UN FLUIDE SOUS PRESSION, ET INSTALLATION CORRESPONDANTE**
VORRICHTUNG UND VERFAHREN ZUR ÜBERWACHUNG UND SICHERUNG EINER ROHRLEITUNG ZUR FÖRDERUNG EINER DRUCKFLÜSSIGKEIT UND ENTSPRECHENDE ANLAGE
DEVICE AND METHOD FOR MONITORING AND SECURING A PIPELINE CONVEYING A PRESSURIZED FLUID, AND CORRESPONDING INSTALLATION

(30) Priorité: 17.12.2010 FR 1060678
(43) Date de publication de la demande: 23.10.2013
(73) Titulaire: CINETIC FILLING, 44140 Le Bignon (FR)
(72) Inventeur: GARREAU, Jean-Michel, F-44840 Les Sorinières (FR); TOUTAIN, Nicolas, F-44150 Saint Gereon (FR)
(74) Mandataire: Blot, Philippe Robert Emile
(86) Numéro de dépôt international: PCT/EP2011/073284
(87) Numéro de publication internationale: WO 2012/080517

(56) Documents cités:
- WO-A1-2010/098674
- GB-A- 954 479
- GB-A- 2 320 760

## Description

La présente invention concerne le transfert de fluides sous pression. Elle concerne plus particulièrement un dispositif de surveillance et de sécurisation d'une canalisation pouvant être flexible et comprenant d'une part une conduite intérieure adaptée pour être reliée à une source de fluide sous pression, d'autre part une conduite extérieure dont le diamètre interne est strictement supérieur au diamètre externe de la conduite intérieure, les deux conduites délimitant entre elles un espace intermédiaire sous une dépression de consigne prédéterminée, le dispositif comprenant un piquage qui débouche dans l'espace intermédiaire (voir GB-954 479 A)

L'invention s'applique notamment au transfert de fluides potentiellement dangereux pour l'environnement ou l'être humain, tels que des fluides frigorigènes ou des carburants émettant des vapeurs de composants organiques volatiles. De tels transferts doivent souvent être réalisés au moyen de canalisations flexibles qui relient une « armoire hydraulique » mobile à un réservoir fixe, auquel cas la canalisation flexible subit des contraintes mécaniques répétées. Il s'agit par exemple du remplissage des climatiseurs de véhicules sur une chaîne de fabrication.

Dans de tels cas, il est important de s'assurer qu'il n'y a pas de fuites entre les deux points de transfert de la canalisation flexible, de sorte que l'intervention d'un dispositif de surveillance et de sécurisation est nécessaire.

Le brevet EP-A-0 753 729 décrit un dispositif de surveillance d'un réseau de conduites destiné au transport d'hydrocarbures. Ces conduites sont constituées de deux tuyaux coaxiaux séparés par un espace intermédiaire rempli d'un gaz sous une pression de 0,1 à 17,0 bars. Une circulation de ce gaz est réalisée à intervalles réguliers vers des analyseurs afin de détecter la présence de vapeurs d'hydrocarbure qui résulterait d'une fuite du tuyau interne.

Ce dispositif n'est pas pleinement satisfaisant car il nécessite des analyseurs de gaz. Ce matériel, coûteux à l'achat et en maintenance, est généralement complexe à l'usage et nécessite un étalonnage régulier avec un gaz étalon. Pour un changement de fluide à transférer, il nécessite habituellement le changement de la cellule de l'analyseur, voir de l'ensemble du capteur.

De plus, ce dispositif génère une consommation régulière du gaz placé dans l'espace intermédiaire entre les deux tuyaux coaxiaux, d'où des coûts supplémentaires d'exploitation.

La présente invention a pour but de pallier les inconvénients mentionnés ci-dessus.

A cet effet, l'invention a pour objet un dispositif de surveillance du type précité, caractérisé par la partie caractérisante de la revendication 1.

Suivant une autre caractéristique ,l'organe de circulation de fluide est interposé entre la soupape et l'espace de sécurité.

Selon un mode de réalisation de l'invention, l'espace de sécurité est un réservoir permettant, en cas de fuite de la conduite intérieure, de stocker le fluide se trouvant dans la canalisation, notamment lorsque celui-ci est dangereux pour l'environnement ou en vue de le recycler après réparation de ladite canalisation. L'invention permet ainsi la sécurisation du transfert de fluides inflammables et/ou explosifs et/ou dangereux pour l'environnement.

L'invention a également pour objet une installation d'alimentation en fluide sous pression, suivant la revendication 4.

Des modes de réalisation de cette installation sont décrits dans les revendications 5 à 7.

L'invention a encore pour objet un procédé de surveillance et de sécurisation d'une canalisation pouvant être flexible et comprenant d'une part une conduite intérieure adaptée pour être reliée à une source de fluide sous pression, d'autre part une conduite extérieure dont le diamètre interne est strictement supérieur au diamètre externe de la conduite intérieure, les deux conduites délimitant entre elles un espace intermédiaire sous une dépression de consigne prédéterminée, ce procédé étant conforme à la revendication 8.

Suivant d'autres caractéristiques de ce procédé :
- ladite dépression prédéterminée est comprise entre -1000 mb et -100 mb;
- ledit premier seuil est compris entre -900 mb et la pression atmosphérique, et de préférence compris entre -400 mb et -200 mb ;
- ledit second seuil est compris entre la pression atmosphérique et +500 mb, et de préférence compris entre +100 mb et +500 mb ; et
- ladite pression d'ouverture (S3) de la soupape (12) est comprise entre +400 mb et +600 mb.

Avantageusement, ladite dépression prédéterminée est inférieure à -300 mb, et de préférence voisine de -900 mb, lorsque le fluide à transférer est inflammable et/ou explosif, de sorte d'éviter la formation d'un mélange inflammable et/ou explosif dans l'espace intermédiaire, en cas de fuite du flexible interne.

De la même façon, lorsque l'espace de sécurité est un réservoir permettant, en cas de fuite de la conduite intérieure, de stocker le fluide se trouvant dans la canalisation, ladite dépression prédéterminée est inférieure à -300 mb, et de préférence inférieure voisine de -900 mb, de sorte de limiter la pollution dudit fluide.

GB 2320760 et WO 2010/098674 montrent d'autres dispositifs de l'état de la technique.

L'invention consiste, mises à part les dispositions exposées ci-dessus, en un certain nombre d'autres dispositions dont il sera plus explicitement question ci-après à propos d'exemples de réalisation, décrits avec référence aux dessins annexés, mais qui ne sont nullement limitatifs. Sur ces dessins :
- la Fig. 1 représente schématiquement une installation suivant l'invention,
- la Fig. 2 représente schématiquement le dispositif de surveillance et de sécurisation de cette installation ;
- la Fig. 3 représente schématiquement un exemple de réalisation d'un embout de la canalisation à surveiller comportant un piquage de raccordement ; et
- la Fig 4 représente schématiquement une variante du dispositif de surveillance et de sécurisation de l'installation suivant l'invention avec un système de récupération du fluide;

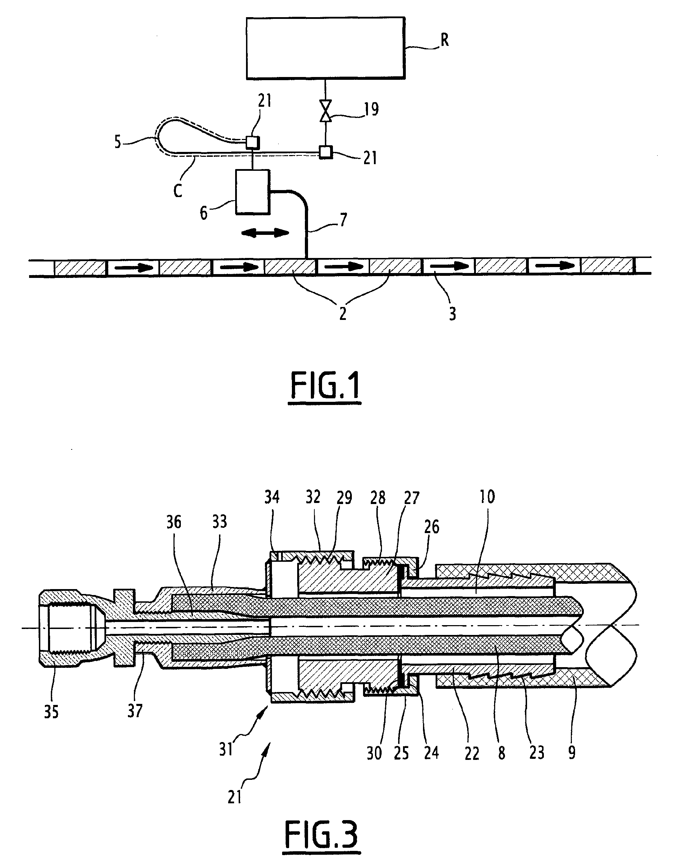

Sur la Fig. 1, on peut voir schématiquement représenté un réservoir fixe R contenant un fluide frigorigène sous pression. Ce fluide est distribué au climatiseur d'une succession de véhicules 2 en mouvement sur un convoyeur 3, via une canalisation flexible 5 qui s'étend entre un point d'alimentation fixe 5A relié au réservoir R et une armoire hydraulique 6 mobile en va-et-vient le long du convoyeur. De l'armoire 6, un flexible de distribution 7 permet de remplir chaque climatiseur. La canalisation 5 est portée par une chaîne porte-câble C, laquelle soumet la canalisation à des contraintes mécaniques répétées.

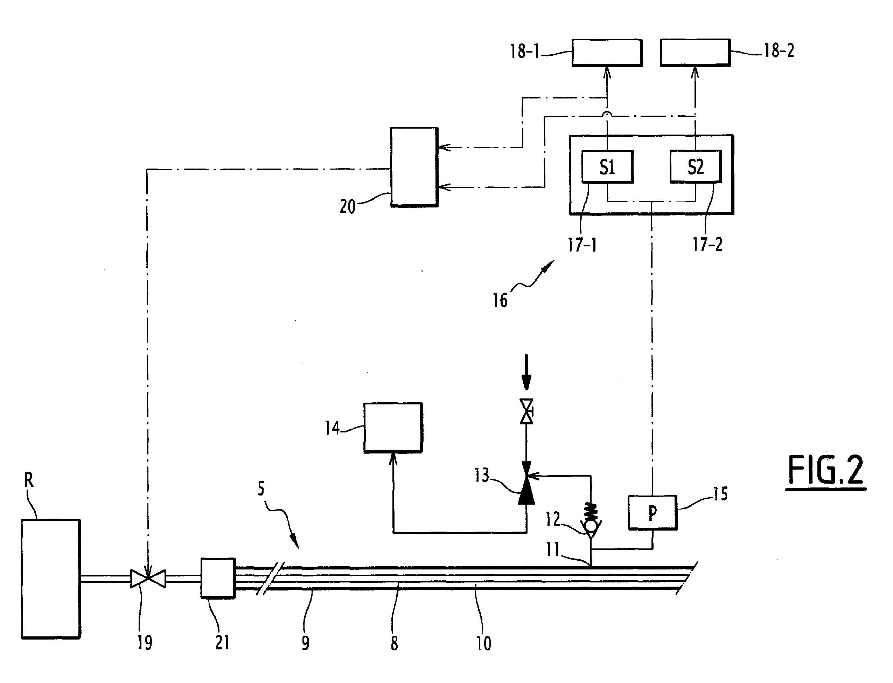

Comme on le voit mieux sur la Fig. 2, la canalisation 5 comprend :
- un flexible interne 8 dans lequel circule le fluide à transférer;
- un flexible externe 9 placé autour du flexible interne 8 et délimitant avec celui-ci un espace intermédiaire 10 situé entre l'extérieur du flexible interne et l'intérieur du flexible externe ;
- un piquage 11 de raccordement qui débouche dans l'espace 10. Comme on le verra plus loin en regard de la Fig.3, ce piquage peut être prévu à une extrémité de la canalisation;
- une soupape de décharge tarée 12 dont l'entrée est reliée au piquage 11, et dont la sortie est reliée à l'aspiration d'un organe de circulation de fluide 13, cet organe pouvant être par exemple un éjecteur. La sortie de ce dernier est reliée à un espace de sécurité 14 non dangereux ;
- un manomètre 15 de contrôle de la pression régnant dans l'espace 10 ; et
- un ensemble électronique 16 relié au manomètre 15.

Cet ensemble 16 comporte deux comparateurs de pression 17-1 et 17-2 qui comparent la pression mesurée par le manomètre 15 à deux seuils prédéterminés S1 et S2, respectivement. Chaque comparateur comporte une sortie adaptée pour déclencher une alarme, 18-1 et 18-2 respectivement, lorsque le seuil respectif S1 ou S2 est dépassé.

De plus, une vanne d'arrêt 19 est interposée entre le réservoir R et l'extrémité amont de la canalisation 5. Cette vanne comporte un actionneur commandé par un organe d'actionnement 20. La sortie de chaque comparateur 17-1 et 17-2 est également reliée à l'actionneur 20 de manière à provoquer la mise de la vanne 19 en position de fermeture lorsque l'un des seuils S1 et S2 est dépassé. En variante, cette commande de la vanne de coupure 19 peut n'être mise en oeuvre que lorsque le seuil S2 le plus élevé est dépassé.

Dans le cas où la réglementation environnementale le permet, l'espace 14 peut être constitué par l'atmosphère extérieure au bâtiment où la canalisation 5 est implantée. Dans le cas où on souhaite recycler le fluide transféré, l'espace de sécurité 14 est un réservoir.

On décrira maintenant le fonctionnement de l'installation.

Initialement, les flexibles internes 8 et externe 9 contiennent de l'air à la pression atmosphérique.

Avantageusement, une étape préliminaire d'initialisation est réalisée afin de conserver la pureté du produit à transférer et d'éviter toute formation de mélange à risques dans le cas de transfert d'un fluide dangereux, inflammable et/ou explosif. Cette étape consiste à faire le vide dans le flexible interne 8 avant tout passage du fluide à transférer, par exemple à l'aide d'une pompe à palettes. A la suite de la mise sous vide, une phase de nettoyage, par exemple par un balayage à l'azote, peut être réalisée, suivie d'une seconde mise sous vide.

Après cette étape d'initialisation, l'espace 10 est mis sous une dépression de consigne P0. Ce vide peut être grossier ; par exemple une pression relative de -300 mb est suffisante. Il est avantageux d'avoir un vide plus poussé, par exemple voisin de -900 mb, pour le transfert de fluides inflammables ou pour limiter la pollution du fluide, en cas de fuite du flexible interne 8, si l'on souhaite le recycler.

Selon l'exemple de réalisation de la figure 2, le vide grossier dans l'espace 10 est généré par l'éjecteur 13 au travers de la soupape 12 au moyen d'air comprimé, l'éjecteur créant aux bornes de la soupape une différence de pression supérieure au tarage.

Une fois ces étapes effectuées, le fluide à transférer peut être injecté dans le flexible interne 8.

En fonctionnement normal, la pression qui règne dans l'espace 10 est surveillée en continu ou périodiquement et comparée aux deux seuils de déclenchement S1 et S2 par les comparateurs 17-1 et 17-2. Selon une variante de réalisation de l'invention, les deux comparateurs 17-1 et 17-2 et le manomètre 15 font partie d'un même organe pouvant être par exemple un capteur de pression ou un pressostat bi-seuil.

L'installation étant normalement à l'air libre, par exemple dans un bâtiment, les conditions initiales sont les suivantes : pression atmosphérique à l'extérieur du flexible externe 9, pression négative (-300 mbar par exemple) dans l'espace 10, pression positive à l'intérieur du flexible interne 8. La pression à l'intérieur du flexible interne 8 est fonction des caractéristiques voulues : par exemple, pour un transfert de fluide frigorigène comme le R134a ou le HFO1234yf, la pression est au moins de 6 bars relatifs de façon à le conserver en phase totalement liquide. Cependant, cette pression peut atteindre des valeurs beaucoup plus élevées.

Deux types de défauts sont à isoler : défaut du flexible interne 8 ou défaut du flexible externe 9.

Si le flexible externe 9 vient à faillir (fuite lente, perçage, rupture...), il y aura une entrée d'air dans l'espace 10 entre le flexible interne 8 et le flexible externe 9. La pression dans cet espace 10 évoluera donc vers la pression atmosphérique. Le seuil S1, supérieur à P0 et légèrement inférieur à la pression atmosphérique (par exemple, environ -100 mb relatif), sera donc dépassé et un défaut sera détecté. Seul le temps de réponse changera entre une fuite lente et une fuite rapide.

Si le flexible interne 8 vient à faillir (fuite lente, perçage, rupture...), il y aura migration de fluide vers l'espace intermédiaire 10. Celle-ci sera automatiquement détectée via une augmentation de la pression dans le flexible externe 9. La pression du fluide étant généralement importante, la pression dans l'espace 10 évoluera donc largement au-dessus de la pression atmosphérique. Le seuil S1 sera donc dépassé. Le seuil S2, supérieur à la pression atmosphérique mais inférieur à la pression d'ouverture de la soupape (par exemple +300 mb contre +500 mb pour le tarage de la soupape), sera lui aussi dépassé, et un défaut sera détecté.

De nouveau, seul le temps de réponse changera entre une fuite lente et une fuite rapide.

Le dépassement du seuil S1 sans dépassement du seuil S2 sera donc le signalement d'un défaut du flexible externe 9. Le dépassement des seuils S1 et S2 sera donc le signalement d'un défaut du flexible interne 8.

Il faut, pour le bon fonctionnement du système, établir le réglage des pressions dans l'ordre suivant (de la plus basse à la plus haute) :
- Pression P0 dans l'espace 10 entre le flexible interne 8 et le flexible externe 9 ;
- Seuil S1 de pression de défaut du flexible externe ;
- Pression atmosphérique ;
- Seuil S2 de pression de défaut flexible interne ;
- Seuil S3 de pression d'ouverture de la soupape ;
- Pression dans le flexible interne 8 pour le transfert du fluide.

Il faut que ces six valeurs soient suffisamment éloignées les unes des autres pour garantir une immunité vis-à-vis des perturbations extérieures :
- par exemple, une variation de la pression atmosphérique ne doit pas perturber la mesure. Un écrasement momentané du flexible externe 9 ne doit pas non plus déclencher intempestivement le système de surveillance. Cet écrasement peut être le fait d'une contrainte mécanique répétée (chaîne porte-câbles par exemple) ou exceptionnelle (pression d'un opérateur ou d'un appareil sur le flexible externe par exemple) ;
- une variation de température ne doit pas non plus déclencher le système. Cela ne sera atteint que si le seuil S1 est suffisamment éloigné de la pression (négative) régnant dans l'espace 10.

Lorsqu'un seuil S1 ou S2 est dépassé, le dispositif de surveillance signale le problème grâce aux alarmes 18-1 et 18-2.

L'isolement de la canalisation 5 est réalisé par mise en position de fermeture de la vanne de coupure amont 19, soit automatiquement par le dispositif de surveillance lorsque la vanne 19 est pilotée, soit manuellement par un opérateur s'il s'agit d'une vanne manuelle.

De plus, si la pression de l'espace 10 s'élève jusqu'au-dessus du seuil S3 d'ouverture de la soupape 12, le fluide dangereux s'évacue de lui-même vers l'espace non dangereux 14. Cela permet de sécuriser l'espace intermédiaire 10 contre les surpressions. Si nécessaire, l'organe de circulation 13 peut être actionné pour accélérer l'évacuation du fluide dangereux.

Le choix de la nature des flexibles interne et externe est aussi important pour le bon fonctionnement du système :
La canalisation flexible 5 doit être capable de supporter des contraintes mécaniques répétées, comme celles provoquées par les chaines porte-câbles ou les gaines de maintien du flexible utilisées dans l'industrie. Pour cela, le flexible interne devra avoir le moins de déformation possible en pression. On choisira, par exemple, un flexible interne 8 dont la pression d'éclatement est dix fois supérieure à la pression normale d'utilisation de ce flexible. Le flexible externe devra aussi avoir le moins de déformation possible, mais en dépression. On choisira, par exemple, des flexibles utilisés pour le tirage au vide d'installation industrielle, par exemple avec une spire en acier. En combinant ces deux caractéristiques mécaniques, et en utilisant des flexibles lisses de façon à avoir un très faible frottement entre les deux flexibles et à éviter l'usure et en n'ayant aucune liaison entre les deux flexibles excepté aux extrémités, la canalisation pourra subir des contraintes mécaniques répétés, tout en garantissant un espace 10 continu permettant la surveillance et la sécurité.

Bien entendu, lorsque la canalisation 5 est portée par une chaîne porte-câble, les flexibles devront pouvoir supporter sans dommage un rayon de courbure inférieur à celui de la chaîne porte-câble.

La sécurité contre l'éclatement sera effective si :
- la pression d'éclatement du flexible externe 9 est largement supérieure à la pression d'ouverture de la soupape 12 : en cas d'éclatement du flexible interne 8, le fluide se déverse dans le flexible externe 9 en faisant augmenter la pression, donc un défaut sera déclaré. La soupape 12 le protège contre l'éclatement. Dans le cas de fluides dangereux, il est nécessaire que le volume de l'espace 14 soit suffisant pour que les caractéristiques de la soupape ne soient pas modifiées, en particulier le débit ou la pression d'ouverture;
- la pression d'éclatement du flexible interne 8 est largement supérieure à la pression de service du fluide transféré, ainsi qu'à la pression atteinte lors des variations de pression brusques en service, comme les coups de bélier.

La faible déformation sera effective si :
- le flexible externe 9 est adapté au vide, c'est-à-dire ne s'écrase pas, ou s'écrase peu, sous l'effet d'une dépression ;
- le flexible interne 8 a une pression d'utilisation largement supérieure à la pression de service du fluide transféré.

Il convient aussi de limiter la porosité et la perméabilité des flexibles, ce qui suppose les conditions suivantes :
- le flexible externe 9 n'est pas perméable à l'air ;
- le flexible interne 8 n'est pas perméable ni à l'air, ni au fluide transféré.

Il est à noter que l'absence totale de perméabilité des flexibles est très difficile à obtenir industriellement. Une faible perméabilité est acceptable si celle-ci ne génère pas de variation sensible de la pression dans l'espace 10 entre deux phases de maintenance, par exemple semestrielles.

Ces conditions sont réunies en utilisant un flexible interne 8 en polyamide et un flexible externe comprenant une spire plate en acier enrobée dans du NBR (nitrile butadiene rubber), qui est un copolymère butadiène-acrylonitrile, ou dans du polyéthylène.

Le choix des diamètres des flexibles interne et externe est aussi important : il faut que le flexible externe ait suffisamment de jeu avec le flexible interne pour pouvoir absorber les contraintes mécaniques. Il faut cependant que le flexible externe ne soit pas disproportionné non plus : le système étant basé sur une variation de pression, plus le volume est important entre les flexibles interne et externe, plus le temps de réponse en terme de détection sera lent.

Ce volume est aussi important en cas de maintenance, car c'est lui qui peut être source de danger potentiel. Avant toute intervention donc, et en particulier en cas de fuite, le fluide présent dans l'espace 10 devra être évacué dans l'espace 14 au moyen de l'organe de circulation 13, l'arrivée de fluide dans le flexible interne ayant été normalement coupée, par exemple par la vanne 19. Cela permet de supprimer tout risque de pression à l'intérieur du flexible externe 9 mais aussi de supprimer tout risque lié au mélange air+fluide dans l'espace 10. Selon la nature du fluide véhiculé dans le flexible interne 8, il peut être avantageux pour des raisons de sécurité d'alimenter l'organe de circulation 13, si c'est un éjecteur, par de l'azote plutôt que par de l'air comprimé. Le fluide contenu dans le flexible interne sera, quant à lui, soit récupéré via un dispositif externe à la canalisation, soit évacué dans le même espace 14 au moyen d'une pompe ou analogue. Ce dispositif sera lié à la nature même du fluide transféré. Dans le cas de transfert de fluides frigorigènes par exemple, le fluide sera avantageusement pompé pour être stocké dans des bouteilles spécifiques via un système de récupération dédié en utilisant un point de connexion externe au flexible, prévu sur un connecteur monté à une extrémité de la canalisation 5.

La figure 3 représente un exemple de connecteur 21 répondant aux besoins, notamment pour des applications de fluides frigorigènes. Ce connecteur assure l'étanchéité des points de raccordement vis à vis de l'extérieur et dispose de piquages permettant de connecter les éléments nécessaires, à savoir le manomètre 15 et la soupape 12.

Le connecteur 21 comprend :
- un embout 22 à denture extérieure 23, emboîté dans le flexible 9 et se terminant par une collerette extérieure 24 ;
- un écrou 25 librement monté sur l'embout 22, et retenu sur celui-ci par une collerette intérieure 26 ;
- une bague intermédiaire 27 ayant deux filetages extérieurs 28 et 29. L'écrou 25 est vissé sur le filetage 28 et comprime un joint annulaire 30 entre la bague 27 et l'embout 22 ;
- un adaptateur 31 ayant une partie large 32 vissée sur le filetage 29 et une partie étroite 33 coiffant étroitement l'extrémité du flexible intérieur 8, ce dernier traversant librement les pièces 22 et 27 ;
- au moins un orifice 34 traversant radialement la partie large 32 et mettant l'espace 10 en communication avec l'environnement. Cet orifice forme le piquage de raccordement 11 précité ; et
- un embout 35 de raccordement du flexible intérieur 8. Une queue 36 de cet embout est vissée dans un prolongement taraudé 37 de l'adaptateur 31 et pénètre à force dans le flexible 8.

En fonction des contraintes d'implantation, le connecteur 21 peut être prévu à une extrémité ou l'autre de la canalisation 5. On peut monter à l'autre extrémité un connecteur identique mais dépourvu d'orifice(s) 34, ou ayant un orifice 34 obturé par un bouchon.

En variante, dans l'installation de la Figure 2, les organes 12 et 15 peuvent être connectés à deux piquages distincts, et/ou l'organe de circulation 13 peut être directement connecté à un piquage sans passer par la soupape 12.

Dans le cas de fluides plus dangereux et/ou plus toxiques, il faudra veiller à augmenter la fiabilité du dispositif par diverses méthodes : redondance des capteurs de pression ou pressostats, contrôle-commande avec un niveau de sécurité (SIL) plus élevé, etc. Il est également possible de compléter ce dispositif par un système de recyclage permettant de ne pas rejeter de fluide et, en plus, de réutiliser le fluide recyclé sans traitement spécifique. Dans le cas où l'on souhaite réutiliser sur l'installation le fluide recyclé, l'utilisation d'un vide plus poussé dans l'espace 10, par exemple inférieur à -900 mb, permet de limiter la pollution du fluide.

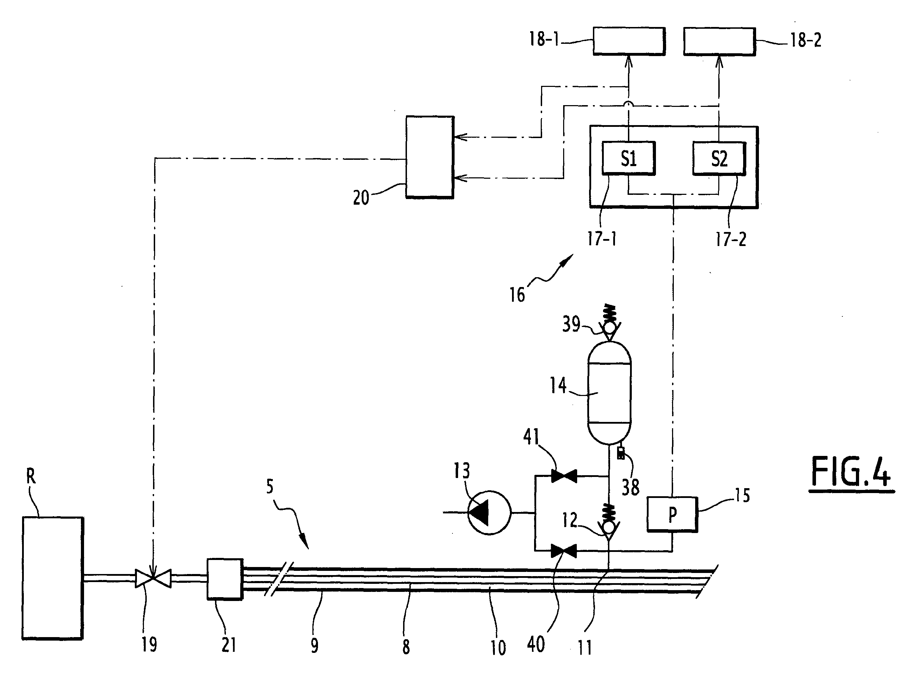

La figure 4 montre une variante de la Figure 2 munie d'un système complémentaire de recyclage.

Dans le réservoir 14 va être stocké le fluide à recycler résultant d'une fuite du flexible intérieur 8. Le réservoir 14 est alimenté par la décharge de la soupape 12 en cas de fuite et donc de surpression dans l'espace intermédiaire 10. Le réservoir 14 est aussi équipé d'un piquage de récupération 38 et d'une soupape 39 uniquement dédiée à la protection contre l'éclatement du réservoir. Selon la nature du fluide, cette soupape est laissée libre ou est tuyautée vers un espace non dangereux.

L'organe de circulation 13 doit être un matériel permettant d'atteindre le niveau de vide requis sans altérer la pureté du produit, par exemple une pompe à palettes. Il est connecté à l'entrée et à la sortie de la soupape 12 au travers de vannes 40 et 41 respectivement. Ainsi, l'organe 13 permet de faire un vide suffisant dans l'espace intermédiaire 10 en ouvrant la vanne 40 mais aussi dans le réservoir 14 en ouvrant la vanne 41.

Dans le cas d'une fuite du flexible extérieur 9, le fluide récupéré est de l'air. Aucun recyclage n'est utile. Il faut seulement refaire le vide dans le réservoir 14 pour remettre en service le système.

Dans le cas d'une fuite du flexible interne 8, le fluide récupéré est le fluide transféré. L'isolation du circuit est réalisée via la vanne 19 en ce qui concerne l'arrivée du fluide. Afin de réparer la fuite, il peut être intéressant de vidanger totalement le circuit : pour cela, il est possible d'ouvrir les vannes 40 et 41 pour éviter la perte de charge induite par la soupape 12 et améliorer la récupération. La personne en charge de la maintenance utilisera la méthode de son choix pour réparer la fuite, après avoir par exemple recherché l'origine de la fuite avec l'injection d'un gaz traceur, ou procèdera au changement de l'ensemble des flexibles et embouts 5, 8, 9, 10 et 21. Le contenu du réservoir est récupéré par le piquage de récupération 38, après isolation et réparation de la fuite ou avant la réparation. Après récupération et réparation, le réservoir 14 est remis au vide pour la remise en service du système.

Ainsi, le produit n'est ni rejeté à l'atmosphère, ni gaspillé car il peut être réutilisé. Il faut néanmoins prévoir un réservoir 14 suffisamment grand pour récupérer la quantité de fluide présent dans le sous-ensemble isolé de la machine.

Dans le cas d'un remplissage de climatiseurs de véhicules, le réservoir doit pouvoir contenir, sans ouverture de la soupape 39, la quantité de réfrigérant contenu dans la cellule de remplissage. De plus, un piège à incondensable (séparateur de fluides généralement monté dans les cellules de remplissage) associé au réservoir permet d'améliorer la pureté du fluide injecté dans le véhicule. Ce dispositif permet d'ôter d'éventuelles impuretés que le fluide aurait absorbées lors de son recyclage.

Dans le cas de fluides explosifs ou inflammables, l'utilisation d'un vide plus poussé dans l'espace 10, par exemple voisin de -900 mb, permet de limiter la présence d'oxygène. Ainsi, l'absence de comburant, ou sa faible concentration, permet d'empêcher la formation d'une atmosphère explosive (ATEX) ou d'une atmosphère inflammable.

Il faut néanmoins prendre en compte la perte de compacité du système, du fait du réservoir nécessaire pour le système avec récupération. En effet, un système décrit selon la figure 2 dans lequel l'espace 14 est l'extérieur du bâtiment présente une bonne compacité qui lui permet d'être embarqué dans les installations mobiles de production industrielle, par exemple un système de remplissage de fluide réfrigérant de climatiseurs de véhicule. Le système avec recyclage obligera, dans la plupart des cas, l'installation de ce dispositif dans une partie non mobile de la machine.

Le dispositif selon l'invention est symétrique : le système de surveillance pourra s'implanter en entrée comme en sortie de la canalisation flexible. Sa place sera choisie plutôt en fonction des contraintes d'implantation : disponibilité d'air comprimé, raccordement électrique des capteurs,... Il est ainsi généralement possible d'installer le dispositif sur une partie fixe de l'équipement.

## Revendications

1. Dispositif de surveillance et de sécurisation d'une canalisation (5) pouvant être flexible et comprenant d'une part une conduite intérieure (8) adaptée pour être reliée à une source de fluide sous pression (R), d'autre part une conduite extérieure (9) dont le diamètre interne est strictement supérieur au diamètre externe de la conduite intérieure, les deux conduites délimitant entre elles un espace intermédiaire (10) sous une dépression de consigne prédéterminée (P0), le dispositif comprenant un piquage (11) qui débouche dans l'espace intermédiaire, le dispositif étant **caractérisé en ce qu'**il comprend :
- un premier comparateur (17-1) relié audit piquage (11) et adapté pour comparer la pression réelle qui règne dans l'espace intermédiaire (10) avec un premier seuil prédéterminé (S1) supérieur à ladite dépression de consigne prédéterminée (P0) et inférieur à la pression atmosphérique ;
- un second comparateur (17-2) relié audit piquage (11) et adapté pour comparer la pression réelle qui règne dans l'espace intermédiaire avec un second seuil prédéterminé (S2) supérieur à la pression atmosphérique;
- des moyens d'alarme (18-1, 18-2) et/ou de commande de coupure (20) de l'alimentation de la conduite intérieure (8), actionnés en réponse à la détection par l'un et/ou l'autre comparateur du dépassement du seuil correspondant ;
- une soupape de sécurité (12) dont l'entrée est reliée à l'espace intermédiaire (10) et dont la pression d'ouverture (S3) est supérieure audit second seuil (S2) ;
- la sortie de la soupape (12) étant reliée à un espace de sécurité (14) ; et
- un organe (13) de circulation de fluide interposé entre l'espace intermédiaire (10) et l'espace de sécurité (14).

2. Dispositif selon la revendication 1, **caractérisé en ce que** l'organe (13) de circulation de fluide est interposé entre la soupape (12) et l'espace de sécurité (14).

3. Dispositif selon la revendication 1, **caractérisé en ce que** l'espace de sécurité (14) est un réservoir permettant, en cas de fuite de la conduite intérieure (8), de stocker le fluide se trouvant dans la canalisation (5), notamment lorsque celui-ci est dangereux pour l'environnement et/ou en vue de le recycler après réparation de ladite canalisation.

4. Installation d'alimentation en fluide sous pression, **caractérisée en ce qu'**elle comprend :
- une source de fluide sous pression (R) ;
- une canalisation (5) comprenant d'une part une conduite intérieure (8) reliée à la source de fluide sous pression (R), d'autre part une conduite extérieure (9), les deux conduites délimitant entre elles un espace intermédiaire (10) sous une dépression prédéterminée (P0) ; et
- un dispositif de surveillance et de sécurisation suivant la revendication 1 à 3.

5. Installation suivant la revendication 4, **caractérisée en ce que** la canalisation (5) est flexible et est portée par une chaine porte-câble, et **en ce que** les conduites (8,9) supportent sans dommage un rayon de courbure inférieur à celui de la chaîne porte-câble.

6. Installation suivant la revendication 4 ou 5, **caractérisée en ce que** la canalisation (5) est capable de supporter des contraintes mécaniques répétées comme celles provoquées par les chaines porte-câbles utilisées dans l'industrie.

7. Installation suivant l'une quelconque des revendications 4 à 6, **caractérisée en ce que** les conduites (8,9) sont lisses de façon à avoir un très faible frottement entre elles.

8. Procédé de surveillance et de sécurisation d'une canalisation (5) pouvant être flexible et comprenant d'une part une conduite intérieure (8) adaptée pour être reliée à une source de fluide sous pression (R), d'autre part une conduite extérieure (9) dont le diamètre interne est strictement supérieur au diamètre externe de la conduite intérieure, les deux conduites délimitant entre elles un espace intermédiaire (10) sous une dépression de consigne prédéterminée (P0), **caractérisé en ce que** :
- on associe à la canalisation un dispositif de surveillance et de sécurisation suivant l'une quelconque des revendications 1 à 3 ;
- on abaisse la pression dans l'espace intermédiaire (10) à une dépression de consigne prédéterminée (P0) ;
- on fait circuler le fluide à l'intérieur de la conduite intérieure (8) sous une pression supérieure à la pression atmosphérique ;
- on suit la pression réelle qui règne dans l'espace intermédiaire (10), de façon continue ou périodique, afin de détecter si celle-ci dépasse ledit premier seuil de pression (S1), révélateur d'une fuite de la conduite extérieure (9), et/ou ledit second seuil de pression (S2), révélateur d'une fuite de la conduite intérieure (8) ; et
- on sécurise contre une surpression l'espace intermédiaire (10) via la soupape de sécurité(12) et/ou l'organe de circulation de fluide (13)

9. Procédé suivant la revendication 8, **caractérisé en ce que** ladite dépression prédéterminée (P0) est comprise entre -1000 mb et -100 mb, et **en ce que** ledit premier seuil (S1) est compris entre -900 mb et la pression atmosphérique, et de préférence compris entre -400 mb et -200 mb.

10. Procédé suivant la revendication 8 ou 9, **caractérisé en ce que** ladite dépression prédéterminée (P0) est inférieure à -300 mb, et de préférence voisine de -900 mb, lorsque le fluide à transférer est inflammable et/ou explosif, de sorte d'éviter la formation d'un mélange inflammable et/ou explosif dans l'espace (10), en cas de fuite du flexible interne (8).

11. Procédé suivant l'une quelconque des revendications 8 à 10, **caractérisé en ce que**, lorsque l'espace de sécurité (14) est un réservoir permettant, en cas de fuite de la conduite intérieure (8), de stocker le fluide se trouvant dans la canalisation (5), ladite dépression prédéterminée (P0) est inférieure à -300 mb, et de préférence inférieure voisine de -900 mb, de sorte à limiter la pollution dudit fluide.

12. Procédé suivant l'une quelconque des revendications 8 à 11, **caractérisé en ce que** ledit second seuil (S2) est compris entre la pression atmosphérique et +500 mb, et de préférence compris entre +100 mb et +500 mb.

13. Procédé suivant l'une quelconque des revendications 8 à 12, **caractérisé en ce que** ladite pression d'ouverture (S3) de la soupape (12) est comprise entre +400 mb et +600 mb.

## Patentansprüche

1. Vorrichtung zum Überwachen und Sichern eines Leitungsnetzes (5), das flexibel sein kann und aufweist:
einerseits ein inneres Leitungsrohr (8), das angepasst ist, um mit einer Druckfluidquelle (R) verbunden zu sein, andererseits ein äußeres Leitungsrohr (9), dessen Innendurchmesser streng größer als der Außendurchmesser des inneren Leitungsrohres ist, wobei die beiden Leitungsrohre zwischen einander einen Zwischenraum (10) unter einem vorbestimmten Einstellgrößen-Unterdruck (P0) begrenzen,
wobei die Vorrichtung einen Stutzen (11) aufweist, der in den Zwischenraum einmündet, wobei die Vorrichtung **dadurch gekennzeichnet** ist, dass sie aufweist:
- eine erste Vergleichsvorrichtung (17-1), die mit dem Stutzen (11) verbunden ist und angepasst ist, um den tatsächlichen Druck, der in dem Zwischenraum (10) herrscht, mit einem ersten vorbestimmten Schwellenwert (S1) zu vergleichen, der größer als der vorbestimmte Einstellgrößen-Unterdruck (P0) und kleiner als der atmosphärische Druck ist,
- eine zweite Vergleichsvorrichtung (17-2), die mit dem Stutzen (11) verbunden ist und angepasst ist, um den tatsächlichen Druck, der in dem Zwischenraum herrscht, mit einem zweiten vorbestimmten Schwellenwert (S2) zu vergleichen, der größer als der atmosphärische Druck ist,
- Alarmmittel (18-1, 18-2) und/oder Mittel zur Steuerung der Unterbrechung (20) der Versorgung des inneren Leitungsrohres (8), die in Antwort auf das Detektieren des Überschreitens des korrespondierenden Schwellenwertes durch die eine und/oder die andere Vergleichsvorrichtung betätigt werden,
- ein Sicherheitsventil (12), dessen Eingang mit dem Zwischenraum (10) verbunden ist und dessen Öffnungsdruck (S3) größer als der zweite Schwellenwert (S2) ist,
- wobei der Ausgang des Ventils (12) mit einem Sicherheitsraum (14) verbunden ist, und
- ein Fluidzirkulationsmittel (13), das zwischen dem Zwischenraum (10) und dem Sicherheitsraum (14) angeordnet ist.

2. Vorrichtung gemäß Anspruch 1, **dadurch gekennzeichnet, dass** das Fluidzirkulationsmittel (13) zwischen dem Ventil (12) und dem Sicherheitsraum (14) angeordnet ist.

3. Vorrichtung gemäß Anspruch 1, **dadurch gekennzeichnet, dass** der Sicherheitsraum (14) ein Behälter ist, der im Fall eines Lecks des inneren Leitungsrohres (8) das Speichern des Fluids ermöglicht, das sich in dem Leitungsnetz (5) befindet, insbesondere dann, wenn dieses gefährlich für die Umwelt ist und/oder im Hinblick auf ein Wiederverwerten nach einer Reparatur des Leitungsnetzes.

4. Einrichtung zur Versorgung mit Druckfluid, **dadurch gekennzeichnet, dass** sie aufweist:
- eine Druckfluidquelle (R),
- ein Leitungsnetz (5), das aufweist: einerseits ein inneres Leitungsrohr (8), das mit der Druckfluidquelle (R) verbunden ist, andererseits ein äußeres Leitungsrohr (9), wobei die beiden Leitungsrohre zwischen einander einen Zwischenraum (10) unter einem vorbestimmten Unterdruck (P0) aufweisen, und
- eine Vorrichtung zum Überwachen und Sichern gemäß Anspruch 1 bis 3.

5. Einrichtung gemäß Anspruch 4, **dadurch gekennzeichnet, dass** das Leitungsnetz (5) flexibel ist und von einer Kabelschleppkette gehalten wird, und **dass** die Leitungsrohre (8, 9) beschädigungsfrei einen Krümmungsradius abstützen, der kleiner als derjenige der Kabelschleppkette ist.

6. Einrichtung gemäß Anspruch 4 oder 5, **dadurch gekennzeichnet, dass** das Leitungsnetz (5) in der Lage ist, wiederholten mechanischen Beanspruchungen, wie zum Beispiel denjenigen, die von in der Industrie verwendeten Kabelschleppketten verursacht werden, standzuhalten.

7. Einrichtung gemäß irgendeinem der Ansprüche 4 bis 6, **dadurch gekennzeichnet, dass** die Leitungsrohre (8, 9) glatt sind, so dass zwischen ihnen eine äußerst geringe Reibung auftritt.

8. Verfahren zum Überwachen und Sichern eines Leitungsnetzes (5), das flexibel sein kann und aufweist: einerseits ein inneres Leitungsrohr (8), das angepasst ist, um mit einer Druckfluidquelle (R) verbunden zu sein, andererseits ein äußeres Leitungsrohr (9), dessen Innendurchmesser streng größer als der Außendurchmesser des inneren Leitungsrohres ist, wobei die beiden Leitungsrohre zwischen einander einen Zwischenraum (10) unter einem vorbestimmten Einstellgrößen-Unterdruck (P0) begrenzen, **dadurch gekennzeichnet, dass**:
- dem Leitungsnetz eine Vorrichtung zum Überwachen und Sichern gemäß irgendeinem der Ansprüche 1 bis 3 zugeordnet wird,
- der Druck in dem Zwischenraum (10) auf einen vorbestimmten Einstellgrößen-Unterdruck (P0) verringert wird,
- das Fluid im Inneren des inneren Leitungsrohres (8) unter einem Druck zirkuliert wird, der größer als der atmosphärische Druck ist,
- dem tatsächlichen Druck, der in dem Zwischenraum (10) herrscht, durchgehend oder periodisch gefolgt wird, um zu detektieren, ob dieser den ersten Druckschwellenwert (S1), der ein Indikator für ein Leck des äußeren Leitungsrohres (9) ist, und/oder den zweiten Druckschwellenwert (S2), der ein Indikator für ein Leck des inneren Leitungsrohres (8) ist, überschreitet, und
- der Zwischenraum (10) über das Sicherheitsventil (12) und/oder das Fluidzirkulationsmittel (13) gegen einen Überdruck gesichert wird.

9. Verfahren gemäß Anspruch 8, **dadurch gekennzeichnet, dass** der vorbestimmte Unterdruck (P0) zwischen -1000 mb und -100 mb liegt, und **dass** der erste Schwellenwert (S1) zwischen -900 mb und dem atmosphärischen Druck liegt und vorzugsweise zwischen -400 mb und -200 mb liegt.

10. Verfahren gemäß Anspruch 8 oder 9, **dadurch gekennzeichnet, dass** der vorbestimmte Unterdruck (P0) kleiner als -300 mb ist und vorzugsweise nahe bei -900 mb liegt, wenn das weiterzuleitende Fluid entflammbar und/oder explosiv ist, um im Fall eines Lecks des inneren Schlauchs (8) die Ausbildung eines entflammbaren und/oder explosiven Gemischs in dem Raum (10) zu verhindern.

11. Verfahren gemäß irgendeinem der Ansprüche 8 bis 10, **dadurch gekennzeichnet, dass**, wenn der Sicherheitsraum (14) ein Behälter ist, der im Fall eines Lecks des inneren Leitungsrohres (8) ein Speichern des Fluids ermöglicht, das sich in dem Leitungsnetz (5) befindet, der vorbestimmte Unterdruck (P0) kleiner als -300 mb ist und vorzugsweise kleiner als nahe bei -900 mb ist, so dass die Verschmutzung des Fluids begrenzt wird.

12. Verfahren gemäß irgendeinem der Ansprüche 8 bis 11, **dadurch gekennzeichnet, dass** der zweite Schwellenwert (S2) zwischen dem atmosphärischen Druck und +500 mb liegt, und vorzugsweise zwischen +100 mb und +500 mb liegt.

13. Verfahren gemäß irgendeinem der Ansprüche 8 bis 12, **dadurch gekennzeichnet, dass** der Öffnungsdruck (S3) des Ventils (12) zwischen +400 mb und +600 mb liegt.

## Claims

1. Device for monitoring and securing a pipework system (5) which may be flexible and which comprises, on the one hand, an inner pipe (8) arranged to be connected to a pressurised fluid source (R) and, on the other hand, an outer pipe (9), the internal diameter of which is strictly greater than the external diameter of the inner pipe, the two pipes delimiting, between them, an intermediate space (10) under a negative pressure having a predetermined setpoint (P0), the device comprising a branch line (11) which opens into the intermediate space, the device being **characterised in that** it comprises:
- a first comparator (17-1) connected to said branch line (11) and arranged to compare the actual pressure present in the intermediate space (10) with a first predetermined threshold (S1) which is greater than said negative pressure having a predetermined setpoint (P0) and less than atmospheric pressure;
- a second comparator (17-2) connected to said branch line (11) and arranged to compare the actual pressure present in the intermediate space with a second predetermined threshold (S2) which is greater than atmospheric pressure;
- means for giving an alarm (18-1, 18-2) and/or ordering the cutting-off (20) of the supply to the inner pipe (8), which are actuated in response to one and/or the other of the comparators detecting that the corresponding threshold has been exceeded;
- a safety valve (12), the input of which is connected to the intermediate space (10) and the opening pressure (S3) of which is greater than said second threshold (S2);
- the valve outlet (12) being connected to a safety space (14); and
- a unit (13) for the circulation of fluid positioned between the intermediate space (10) and the safety space (14).

2. Device according to claim 1, **characterised in that** the fluid circulation unit (13) is positioned between the valve (12) and the safety space (14).

3. Device according to claim 1, **characterised in that** the safety space (14) is a tank which, in the event of a leak from the inner pipe (8), allows the fluid located in the pipework system (5) to be stored, especially when that fluid is dangerous to the environment and/or with a view to reusing it after repairing said pipework system.

4. Installation for the supply of fluid under pressure, **characterised in that** it comprises:
- a pressurised fluid source (R);
- a pipework system (5) comprising, on the one hand, an inner pipe (8) connected to the pressurised fluid source (R) and, on the other hand, an outer pipe (9), the two pipes delimiting, between them, an intermediate space (10) under a predetermined negative pressure (P0); and
- a monitoring and securing device according to claim 1 to 3.

5. Installation according to claim 4, **characterised in that** the pipework system (5) is flexible and carried by a cable drag chain; and **in that** the pipes (8, 9) withstand a radius of curvature less than that of the cable drag chain without damage.

6. Installation according to claim 4 or 5, **characterised in that** the pipework system (5) is capable of withstanding repeated mechanical stresses such as those caused by cable drag chains used in industry.

7. Installation according to any one of claims 4 to 6, **characterised in that** the pipes (8, 9) are smooth so as to have very little friction between them.

8. Method of monitoring and securing a pipework system (5) which may be flexible and which comprises, on the one hand, an inner pipe (8) arranged to be connected to a pressurised fluid source (R) and, on the other hand, an outer pipe (9), the internal diameter of which is strictly greater than the external diameter of the inner pipe, the two pipes delimiting, between them, an intermediate space (10) under a negative pressure having a predetermined setpoint (P0), **characterised in that**:
- a monitoring and securing device according to any one of claims 1 to 3 is associated with the pipework system;
- the pressure in the intermediate space (10) is lowered to a negative pressure having a predetermined setpoint (P0);
- the fluid is caused to circulate inside the inner pipe (8) at a pressure greater than atmospheric pressure;
- the actual pressure present in the intermediate space (10) is monitored continuously or periodically, in order to detect if it exceeds said first pressure threshold (S1), which is indicative of a leak from the outer pipe (9), and/or said second pressure threshold (S2), which is indicative of a leak from the inner pipe (8); and
- the intermediate space (10) is secured against overpressure, by means of the safety valve (12) and/or the fluid circulation unit (13).

9. Method according to claim 8, **characterised in that** said predetermined negative pressure (P0) is from -1000 mb to -100 mb; and **in that** said first threshold (S1) is from -900 mg to atmospheric pressure, preferably from -400 mg to -200 mb.

10. Method according to claim 8 or 9, **characterised in that** said predetermined negative pressure (P0) is less than -300 mb, preferably about -900 mb, when the fluid being transferred is flammable and/or explosive, so as to avoid the formation of a flammable and/or explosive mixture in the space (10) in the event of a leak from the flexible inner pipe (8).

11. Method according to any one of claims 8 to 10, **characterised in that**, when the safety space (14) is a tank which, in the event of a leak from the inner pipe (8), allows the fluid located in the pipework system (5) to be stored, said predetermined negative pressure (P0) is less than -300 mb, preferably less than about -900 mb, so as to limit contamination of said fluid.

12. Method according to any one of claims 8 to 11, **characterised in that** said second threshold (S2) is from atmospheric pressure to +500 mb, preferably from +100 mb to +500 mb.

13. Method according to any one of claims 8 to 12, **characterised in that** said opening pressure (S3) of the valve (12) is from +400 mb to +600 mb.
